# EUROPÄISCHE PATENTSCHRIFT

(11) **EP 3 788 267 B1**
(45) Veröffentlichungstag und Bekanntmachung des Hinweises auf die Patenterteilung: **16.08.2023**
(21) Anmeldenummer: 19727618.1
(22) Anmeldetag: 24.05.2019
(51) Int. Cl.: F16C 19/54, F16C 19/56, F16C 17/04

(54) **WÄLZLAGER**
ROLLING BEARING
PALIER À ROULEMENT

(30) Priorität: 01.06.2018 DE 202018103079 U
(43) Veröffentlichungstag der Anmeldung: 10.03.2021
(73) Patentinhaber: Liebherr-Components Biberach GmbH, 88400 Biberach/Riss (DE)
(72) Erfinder: ALTMAYER, Thomas, 88441 Mittelbiberach (DE); RUF, Markus, 88339 Bad Waldsee (DE); PALMER, Andreas, 88499 Riedlingen (DE); ZELL, Robert, 88433 Schemmerhofen (DE)
(74) Vertreter: Thoma, Michael
(86) Internationale Anmeldenummer: PCT/EP2019/063476
(87) Internationale Veröffentlichungsnummer: WO 2019/228926

(56) Entgegenhaltungen:
- WO-A2-2008/088213
- DE-U1-202007 011 577

## Beschreibung

Die vorliegende Erfindung betrifft ein Wälzlager, insbesondere ein mittenfreies Großwälzlager, mit zwei konzentrischen, zueinander drehbaren Laufringen, die in axialer Richtung des Wälzlagers durch zumindest zwei Axiallager, die auf gegenüberliegenden Stirnseiten eines Laufrings angeordnet sind, und in radialer Richtung durch mehrere Radiallager, die auf Innenumfangs- und Außenumfangsseiten eines Lagerrings angeordnet sind, aneinander abgestützt sind.

Bei Großwälzlagern für spezielle Einsatzzwecke wirken bisweilen beträchtliche Biegemomente und Kippkräfte auf die Lagerringe, die zu Verwindungen und einem Winkelversatz der Laufringe zueinander führen können, so dass vorzeitiger Verschleiß im Bereich der Laufringe und Wälzkörper eintritt. Solche Großwälzlager können Maße von mehreren Metern im Durchmesser aufweisen und bspw. an Kranen eingesetzt werden, um bspw. den Abstützmast eines Schiffskrans oder Hafenkrans drehbar zu lagern und abzustützen, wobei hier nicht nur vertikale Kräfte abzufangen sind, sondern auch Biegemomente bzw. Kippbelastungen aufzufangen sind. Die Verwindungs- und Kippproblematik wird dabei noch verschärft, wenn die Mitte bzw. das Zentrum des Lagers auszusparen ist, um das abzustützende Bauteil, bspw. den genannten Kranstützmast, durch das Lager hindurchtreten zu lassen, bspw. um am hindurchtretenden Teil einen Drehantrieb anbringen zu können. Die Lagerringe eines solchen mittenfreien Großwälzlagers können aus Platzgründen insbesondere in radialer Richtung nicht beliebig groß bauen, so dass die erreichbaren Flächenträgheitsmomente der Laufringe begrenzt sind.

Um die auftretenden Kippmomente abzufangen und ein Ablösen der Wälzkörper von den Laufbahnen infolge von Verwindungen der Lagerringe möglichst zu vermeiden, wurde angedacht, an einem Lagerring einen Nasenring vorzusehen, der in eine Nut am anderen Lagerring eingreift und von Axial- und Radiallagern in der Nut sozusagen mehrseitig eingespannt wird, um Kräfte in verschiedene Richtungen abfangen zu können. Ein solches Großwälzlager zeigt bspw. die Schrift EP 20 92 204 B1, gemäß der der Nasenring des einen Laufrings durch zwei gegenüberliegende Axiallager und zwei gegenüberliegende Radiallager in der Nut des anderen Laufrings eingespannt sein soll, um unerwünschte Verformungen des Nasenringes zu verhindern und eine Ablösung der Laufringe in radialer Richtung zu vermeiden. Ein ähnliches Großwälzlager und dessen Einbausituation am Stützmast eines Schiffkrans zeigt die Schrift WO 2008/088 213 A2.

Während die genannten Schriften sich im Wesentlichen mit der Problematik des Ablösens der Radiallager in Folge von Verwindungen der Laufringe befassen und ein solches Lupfen der Radiallager durch das Einspannen des Nasenrings von gegenüberliegenden Mantelflächenseiten her vermeiden wollen, kommt es indes immer noch zu Verkantungen und Verwindungen im Bereich der Axiallager. Gleichzeitig können radiale Verformungen zu einem Ausfall des Lagers führen.

Um Bruch und Ermüdung zu widerstehen, müssen solche Großwälzlager mit Nasenringen an den Querschnitten der Nasen, insbesondere auch im Bereich der Nasenwurzeln, d.h. den Übergängen zu den Laufringabschnitten, an denen weitere Lagerteile wie Verbolzungen der Ringsegmente, Anschlusselemente für die Einbauumgebung und Antriebsteile wie Verzahnungen vorgesehen sind, ausreichend dimensioniert sein. Eine Vergrößerung der Querschnitte im Nasen- und Nasenwurzelbereich führt jedoch zu einem signifikanten Gewichts- und auch Kostenanstieg. Dies gilt insbesondere für sehr große Lager mit Doppelrollen, die Durchmesser von auch mehr als 10m haben können.

Andererseits sind aber gerade solche sehr großen Großwälzlager besonders empfindlich gegen auch nur kleinere Verformungen der Lagerringe und Schiefstellung der Wälzkörperlaufbahnen. Da die vertikalen Kranbelastungen und die entsprechenden Reaktionskräfte in der Kranmastlagerung üblicherweise immer noch einen großen bzw. beträchtlichen Teil der Wälzlagerbelastung ausmachen, wird üblicherweise das untere Axiallager, das die vertikalen Kranlasten abfangen muss, in Form eines tragkräftigen Zylinderrollenlagers ausgebildet ist, dessen Zylinderrollen eine relativ große Zylinderrollenbreite besitzen, um eine ausreichend große Berührungslinie zu haben und die Flächenpressungen erträglich zu halten. Solche breiten Zylinderrollenlager reagieren jedoch besonders kritisch auf Verkippungen bzw. Schiefstellungen der Laufbahnen zueinander, da hier sehr rasch nur noch ein sehr kleiner Teil der Zylinderrollen tatsächlich trägt.

Die WO 2008/088213 A2 offenbart ein mittenfreies Großwälzlager mit zwei konzentrischen Laufringen, welche in axialer Richtung durch zwei auf gegenüberliegenden Stirnseiten eines der Laufringe angeordnete Axiallager und in radialer Richtung durch vier Radiallager, die auf Innen- und Außenumfangflächen der Laufringe angeordnet sind, abgestützt sind.

Die DE 20 2007 011577 U1 offenbart ein mittenfreies Großwälzlager mit zwei konzentrischen Laufringen, wobei einer der Laufringe den anderen Laufring beidseitig umgreift und wobei die Laufringe durch zwei Reihen von Wälzkörpern axial und radial gegeneinander abgestützt sind.

Der vorliegenden Erfindung liegt die Aufgabe zugrunde, ein verbessertes Wälzlager der eingangs genannten Art zu schaffen, das Nachteile des Standes der Technik vermeidet und letzteren in vorteilhafter Weise weiterbildet. Insbesondere soll ein mittelfreies Großwälzlager geschaffen werden, das auch unter hohen Lasten stabil gegen radiale Verformungen ist und dauerhaft Ermüdung und Bruch widersteht, ohne hierfür größere Ringquerschnitte zu benötigen, um die mit dickeren Querschnitten einhergehenden Gewichts- und Kostennachteile zu vermeiden. Ferner sollen hohe Axiallasten abgefangen werden können, ohne hierbei gegenüber Kippbelastungen und Schiefstellungen der Laufbahnen anfällig zu sein.

Erfindungsgemäß wird die genannte Aufgabe durch ein Wälzlager gemäß Anspruch 1 gelöst. Bevorzugte Ausgestaltungen der Erfindung sind Gegenstand der abhängigen Ansprüche.

Es wird also vorgeschlagen, die Laufringe in radialer Richtung durch mindestens drei Radiallager, die verteilt auf Innen- und Außenumfangsseiten eines Laufrings angeordnet sind, gegeneinander abzustützen. Durch die verteilte Anordnung der Radiallager auf Innen- und Außenumfangsseiten werden die Lagerringe jeweils gegenläufig aneinander abgestützt, so dass jeder Lagerring sowohl gegen radiale Verformung nach innen auf die Drehachse des Lagers zu als auch gegen radiale Verformungen nach außen von der Drehachse weg am jeweils anderen Lagerring abgestützt ist. Dabei können die Lagerkräfte über die drei oder mehr Radiallager an verschiedenen Abschnitten der Lagerringe eingeleitet bzw. abgefangen werden, um eine Verteilung der Belastungen zu erzielen und Überbelastungen an einem einzelnen Ringabschnitt zu vermeiden. Dabei kann mit gleichmäßigen, relativ dünnen Lagerringquerschnitten gearbeitet werden und auf Verdickungen und Querschnittsvergrößerungen der Lagerringe verzichtet werden, wodurch Gewicht und Material- und Fertigungskosten niedrig gehalten werden können.

Erfindungsgemäß ist zumindest eines der zumindest drei Radiallager in einem Lagerspaltabschnitt, der zwischen den auf gegenüberliegenden Laufringstirnseiten angeordneten Axiallagern liegt, angeordnet und zumindest ein anderes der zumindest drei Radiallager in einem anderen Lagerspaltabschnitt, der zwischen keinem der Axiallager liegt, angeordnet. Mit Lagerspalt ist dabei die Trennfuge bzw. der Spalt zwischen den beiden konzentrischen Lagerringen gemeint.

Vorteilhafterweise können die Laufringe in radialer Richtung durch vier oder auch mehr als vier Radiallager gegeneinander abgestützt sein, wobei drei der zumindest vier Radiallager auf einer Außenumfangsseite des einen Laufrings angeordnet sind und ein viertes der zumindest vier Radiallager auf einer Innenumfangsseite des genannte Laufrings angeordnet ist. Damit wirken drei Radiallager in die eine Radialrichtung, bspw. nach außen, während das vierte Radiallager in die entgegengesetzte Richtung nach innen abstützt. Überraschenderweise können trotz einer solchen unsymmetrischen Radiallagerverteilung Radialverformungen der Lagerringe sowohl nach außen als auch nach innen gleichermaßen verhindert werden.

Insbesondere können drei Radiallager so angeordnet sein, dass sie Radialverformungen des Innenrings nach außen und Radialverformungen des Außenrings nach innen abfangen, während das vierte Radiallager so angeordnet ist, dass es Radialverformungen des Außenrings nach außen und Radialverformungen des Innenrings nach innen abfängt. Mit anderen Worten können drei Radiallager an einer Außenumfangsfläche des Innenrings und einer Innenumfangsfläche des Außenrings laufen und das vierte Radiallager umgekehrt an einer Innenumfangsfläche des Innenrings und einer Außenumfangsfläche des Außenrings laufen. Bei nur drei Radiallagern können vorteilhafterweise können zwei Radiallager an einer Außenumfangsfläche des Innenrings und einer Innenumfangsfläche des Außenrings laufen und das dritte Radiallager umgekehrt an einer Innenumfangsfläche des Innenrings und einer Außenumfangsfläche des Außenrings laufen. Grundsätzlich kann die Verteilung und Anordnung der Radiallager aber in verschiedener Weise getroffen sein, bspw. umgekehrt mehr Radiallager den Außenring nach innen abstützen und weniger Radiallager den Außenring nach außen abstützen, oder bspw. eine paarweise bzw. symmetrische Verteilung vorgesehen sein, so dass gleich viele Radiallager den Außenring nach innen und nach außen abstützen.

Um eine kompakte Anordnung und ein festes Einspannen der Lagerringe aneinander zu erzielen, kann in Weiterbildung der Erfindung vorgesehen sein, dass zwei der zumindest drei Radiallager in radialer Richtung betrachtet einander überdeckend, insbesondere in einer gemeinsamen Ebene, die senkrecht zur Wälzlagerdrehachse steht, angeordnet sind, und zumindest ein weiteres der zumindest drei Radiallager in radialer Richtung betrachtet gegenüber allen Radiallagern und ggf. auch gegenüber allen Axiallagern überdeckungsfrei angeordnet ist. Insbesondere können zwei Radiallager in einer gemeinsamen, zur Lagerdrehachse senkrechten Ebene angeordnet sein, und zwei weitere Radiallager von dieser Ebene unterschiedlich weit beabstandet angeordnet sein, so dass die zwei weiteren Radiallager - in radialer Richtung betrachtet - weder sich noch die beiden erstgenannten Radiallager überdecken. Die beiden weiteren Radiallager können dabei auch von den Axiallagern axial beabstandet angeordnet sein, so dass sie auch die Axiallager - in radialer Richtung betrachtet - nicht überdecken. Insbesondere können die Radiallager auf verschiedenen Seiten eines oder aller der Axiallager angeordnet sein.

Alternativ oder zusätzlich können die beiden sich in radialer Richtung überdeckenden Radiallager in radialer Richtung betrachtet auch zumindest eines der Axiallager überdeckend angeordnet sein, wobei insbesondere zwei der zumindest drei Radiallager und zwei der Axiallager zusammen eine gemeinsame Ebene, die sich senkrecht zur Drehachse des Wälzlagers erstreckt, schneiden. Ggf. kann aber auch nur eines der Radiallager mit einem oder mehreren der Axiallager eine gemeinsame, zur Lagerdrehachse senkrechte Ebene schneiden und somit das eine oder die mehreren Axiallager in radialer Richtung überdecken.

Um bei kompakter, platzsparender Anordnung trotz der erhöhten Radiallagerzahl ausreichend große Radialwälzkörper vorsehen zu können, kann zumindest eines der zumindest drei Radiallager eine in einem Laufring versenkte Laufbahn aufweisen, deren Versenktiefe mehr als 25% oder mehr als 33% oder mehr als 50% oder mehr als 66% des Durchmessers der Wälzkörper des genannten Radiallagers beträgt. Vorteilhafterweise können mehrere oder alle der Radiallager solche versenkten Laufbahnen besitzen.

Solche versenkten Laufbahnen können am Innenring und/oder am Außenring des Wälzlagers und/oder an dem Lagerring, an dem eine Verzahnung für einen Antrieb vorgesehen ist, angeordnet sein. Alternativ oder zusätzlich kann eine solche versenkte Laufbahn eines Radiallagers auch an einem Ringabschnitt vorgesehen sein, der auf gegenüberliegenden Axialstirnseiten von den Axiallagern abgestützt bzw. eingespannt ist.

Solche versenkten Laufbahnen können besonders vorteilhaft sein, wenn die Wälzkörper der Radiallager Zylinderrollen sind. Grundsätzlich können die Radiallager aber auch anders geformte Wälzkörper wie bspw. Kugeln, Kegelrollen, Nadeln oder Tonnenrollen aufweisen.

Alternativ oder zusätzlich können alle Axiallager in einem Lagerspaltabschnitt, der zwischen zwei oder zwischen drei Radiallagern liegt, angeordnet sein. Mit anderen Worten können vorteilhafterweise Radiallager beidseits aller Axiallager vorgesehen sein. Bevor sich der Lagerspalt zwischen den Lagerringen zur Umgebung hin öffnet bzw. auf dort vorgesehene Dichtungen trifft, ist bei dieser Konfiguration jeweils zumindest ein Radiallager vorgesehen, das jeweils - in Längsrichtung des Lagerspalts - näher zur Lagerspaltdichtung bzw. -öffnung liegt als ein nächstes Axiallager. Grundsätzlich wäre es aber auch möglich, dass ein Axiallager das im Lagerspalt äußerste, d.h. das der Spaltdichtung am nächsten kommende Lager bildet.

Vorteilhafterweise werden die Lagerringe gegeneinander in axialer Richtung nicht nur durch zwei, sondern durch drei oder vier oder mehr Axiallager abgestützt.

Hierbei kann vorteilhafterweise vorgesehen sein, dass zwei Axiallager auf derselben Stirnseite eines Laufrings und/oder zwei unmittelbar nebeneinanderliegende Axiallager auf in axialer Richtung zueinander versetzen Laufbahnen angeordnet sind.

Insbesondere kann nach einem weiteren eigenständigen Aspekt vorteilhafterweise vorgesehen werden, den einen Laufring gegenüber dem anderen Laufring durch zumindest ein drittes Axiallager abzustützen, um auch mit schmäler bauenden Lagern hohe Axialkräfte abfangen zu können und auf verschiedene Abstützpunkte verteilen zu können. Dabei werden die zwei auf derselben Laufringstirnseite angeordneten Axiallager nicht nur quer voneinander beabstandet, sondern vorzugsweise auch in axialer Richtung zueinander versetzt, um bzgl. Verwindungen und Schiefstellungen andere Angriffspunkte und damit eine höhere Robustheit zu erzielen. Sind die Laufringe durch ein drittes Axiallager in axialer Richtung aneinander abgestützt, können zwei Axiallager auf derselben Seite des einen Laufrings auf separaten, in axialer Richtung des Wälzlagers zueinander versetzten Laufbahnen angeordnet sein. Durch den Axialversatz der Laufbahnen der beiden auf derselben Laufringstirnseite angeordneten Axiallager erhalten die Axiallager, obwohl sie auf derselben Laufringseite angeordnet sind, unterschiedliche Hebelstützverhältnisse, so dass eine bessere Abstützung bei Verwindungen und Laufbahnschiefstellungen erzielt werden kann und nie beide Axiallager gleichzeitig in derselben Weise Verkantungen oder Abhebungen unterworfen sind.

Vorteilhafterweise können die beiden auf derselben Laufringstirnseite angeordneten Axiallager jeweils eine Breite besitzen, die kleiner ist als die Breite des oder der auf der gegenüberliegenden Laufringstirnseite angeordneten Axiallager. Werden als Axiallager Zylinderrollenlager verwendet, ist die genannte Breite die Länge der zylindrischen Wälzkörper und/oder die Breite der Laufbahn des Lagers. Durch die Verwendung zweier unabhängiger, relativ schmaler Laufbahnen für die beiden auf derselben Laufringstirnseite angeordneten Axiallager ist eine Anpassung der Schiefstellung aus einer Verformung der Anschlusskonstruktion besser möglich. Zudem bringen zwei solche abgesetzte, relativ schmale Laufbahnen in der Summe einen längeren Linienkontakt zwischen Wälzkörpern und Laufbahnen, insbesondere auch wenn aufgrund von Verformungen geringfügige Schiefstellungen der Laufbahnen entstehen. Zudem sind schmale Laufbahnen auch fertigungstechnisch mit höherer Präzision zu fertigen, so dass auch Formtoleranzen weniger auftreten und ins Gewicht schlagen.

Der genannte Axialversatz der beiden auf derselben Stirnflächenseite angeordneten Axiallager kann grundsätzlich unterschiedlich stark ausgebildet bzw. bemessen sein. Um einerseits eine spürbare Abkopplung bezüglich Verwindungen und unterschiedliche Stützverhältnisse zu erreichen, beträgt der Versatz in Weiterbildung der Erfindung zumindest 10% des Wälzkörperdurchmessers der beiden genannten Axiallager. Um andererseits eine insgesamt kompakte Lagergeometrie und Nasenkontur zu erzielen, die den Nasenring nicht zu sehr ausdünnt und stabil lässt, kann der genannte Versatz weniger als 200% des genannten Wälzkörperdurchmessers betragen. Haben die beiden auf derselben Laufringstirnseite angeordneten Axiallager unterschiedliche Wälzkörperdurchmesser, beziehen sich die genannten Versatzmaße vorteilhafterweise auf den größeren Wälzkörperdurchmesser.

Vorteilhafterweise kann der genannte Axialversatz der beiden auf derselben Laufringstirnseite angeordneten Axiallager zwischen 10% und 100%, vorzugsweise etwa 10% bis 75% und insbesondere etwa 15% bis 35% des Wälzkörperdurchmessers betragen. Der Versatz kann insbesondere derart gewählt sein, dass in radialer Richtung betrachtet die beiden Wälzlager mit ihren Wälzkörpern einander noch überdecken.

Betrachtet man die auf gegenüberliegenden Stirnseiten des jeweiligen Laufrings angeordneten Axiallager, können die drei Axiallager vorteilhafterweise unterschiedliche Laufbahndurchmesser besitzen.

In Weiterbildung der Erfindung können die Laufringe durch ein viertes Axiallager in axialer Richtung abgestützt sein, wobei vorzugsweise jeweils zwei Axiallager paarweise auf jeder der gegenüberliegenden Stirnseiten eines Lagerrings angeordnet sind.

Dabei kann vorteilhafterweise vorgesehen sein, dass nur auf einer der beiden gegenüberliegenden Stirnseiten eines Laufrings die dort vorgesehenen Axiallager auf in axialer Richtung zueinander versetzen Laufbahnen angeordnet sind, während die auf der anderen der beiden gegenüberliegenden Stirnseiten des Laufrings vorgesehenen Axiallager auf in axialer Richtung zueinander versatzfreien Laufbahnen angeordnet sind.

Alternativ kann aber auch vorgesehen werden, dass auf jeder der beiden gegenüberliegenden Stirnseiten eines Laufrings die dort vorgesehenen Axiallager jeweils auf in axialer Richtung zueinander versetzten Laufbahnen angeordnet sind.

In Weiterbildung der Erfindung kann einer der Laufringe einen radial vorspringenden Ringabschnitt aufweisen, der in eine Nut im anderen Laufring eintaucht, wobei alle Axiallager an dem genannten radial vorspringenden Ringabschnitt abgestützt sein können.

Vorteilhafterweise stützen sich die Radiallager zumindest nicht alle an dem besagten radialen Ringvorsprung ab bzw. sind zumindest einige der Radiallager außerhalb der genannten Nut angeordnet. Insbesondere kann vorgesehen sein, dass der genannte Laufring mit dem radial vorspringenden Ringabschnitt zumindest einen axial vorspringenden Ringabschnitt besitzt, der vom radial vorspringenden Ringabschnitt axial vorspringt und/oder sich außerhalb der Nut, in der der radial vorspringende Ringabschnitt eintaucht, erstreckt, wobei zumindest zwei der zumindest drei Radiallager an dem zumindest einen axial vorspringenden Ringabschnitt abgestützt sind.

In vorteilhafter Weiterbildung der Erfindung kann vorgesehen sein, dass eines der zumindest zwei auf derselben Laufringstirnseite angeordneten Axiallager das oder jedes auf der anderen Laufringstirnseite angeordnete Axiallager in axialer Richtung betrachtet überdeckt, während das andere der zwei auf derselben Laufringstirnseite liegenden Axiallager keine Überdeckung mit dem genannten, auf der anderen Laufringstirnseite liegenden Axiallager hat.

In alternativer Weiterbildung der Erfindung kann die Anordnung der Axiallager auch derart getroffen sein, dass jedes der Axiallager Überdeckung - bei Betrachtung in Axialrichtung - mit zumindest einem der auf der anderen Laufringstirnseite liegenden Axiallager hat.

Grundsätzlich wäre es aber auch möglich, dass ein auf der genannten anderen Laufringstirnseite liegendes Axiallager zwischen den beiden auf derselben Laufringstirnseite liegenden Axiallager angeordnet ist, d.h. die Wälzkörper des auf der einen Laufringstirnseite liegenden Axiallagers auf einem Laufbahndurchmesser laufen, der zwischen dem Laufbahndurchmesser der beiden anderen, auf einer gemeinsamen Laufringstirnseite liegenden Axiallager liegt.

Die Anordnung der Radiallager zueinander kann dabei grundsätzlich verschieden sein. In vorteilhafter Weiterbildung der Erfindung können zwei oder mehr Radiallager einander in radialer Richtung betrachtet überdecken, bspw. in einer gemeinsamen Ebene, die senkrecht zur Drehachse des Wälzlagers steht, angeordnet sein.

Die Ausbildung der zuvor genannten Radiallager kann dabei verschieden getroffen sein. Gemäß einer vorteilhaften Ausbildung der Erfindung können die beiden Radiallager Wälzkörper mit verschiedenen Geometrien besitzen, wobei insbesondere eines der Radiallager als Zylinderrollenlager ausgebildet und das andere Radiallager als Kugellager ausgebildet sein kann. Einerseits können durch die Verwendung des Zylinderrollenlagers hohe Radialkräfte bei kompakter radialer Bauweise übertragen werden, während andererseits durch das Kugellager, das eine Stützwirkung auch in zur Radialrichtung geneigten Richtungen besitzt, auch Kräfte mit Axialkomponenten abgetragen werden können.

In alternativer Weiterbildung der Erfindung können aber auch alle Radiallager denselben Wälzkörpertypus bzw. denselben Geometrietypus besitzen, insbesondere alle als Zylinderrollenlager ausgebildet sein.

Die Erfindung wird nachfolgend anhand bevorzugter Ausführungsbeispiele und zugehöriger Zeichnungen näher erläutert. In den Zeichnungen zeigen:

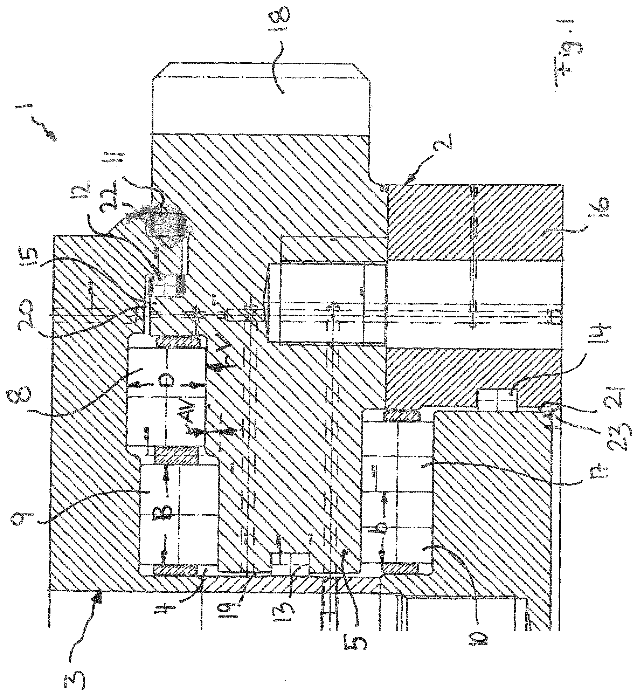

- Fig. 1:: einen Längshalbschnitt eines mittenfreien Großwälzlagers nach einer vorteilhaften Ausführung der Erfindung, gemäß der die beiden Laufringe durch vier Axiallager in Form von Zylinderrollenlagern und vier Radiallagern ebenfalls in Form von Zylinderrollenlagern gegeneinander abgestützt sind,

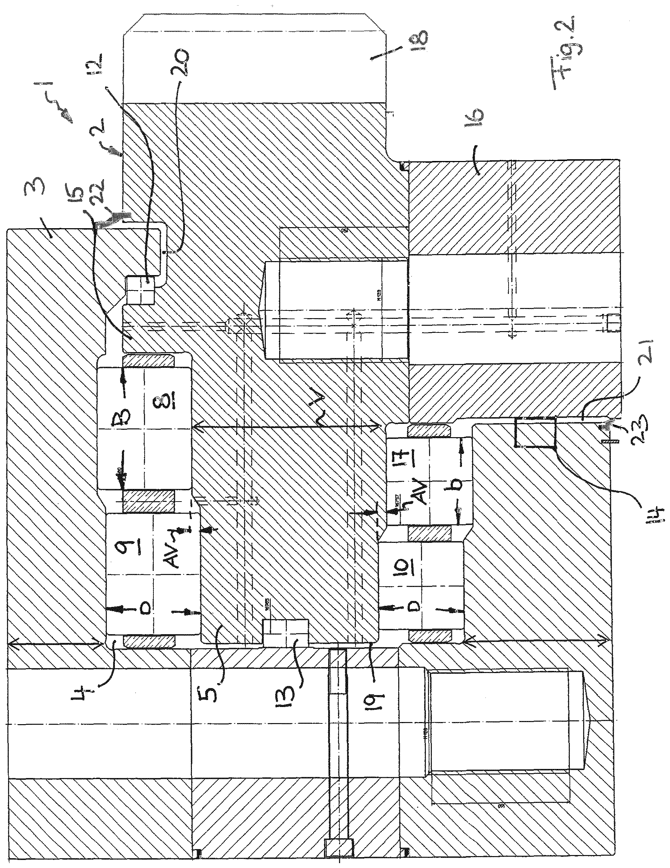

- Fig. 2:: einen Längshalbschnitt durch ein mittenfreies Großwälzlager gemäß einer weiteren vorteilhaften Ausführung der Erfindung, bei der die beiden Laufringe ebenfalls durch vier, paarweise mit Versatz zueinander angeordnete Axiallager in Form von Zylinderrollenlagern und drei Radiallagern in Form von Zylinderrollenlagern gegeneinander abgestützt sind.

Wie Fig. 1 - und auch die anderen Figuren - zeigen, kann das Wälzlager 1 zwei Laufringe 2 und 3 umfassen, von denen der eine Laufring 2 einen Innenring und der andere Laufring 3 einen Außenring bildet. Der genannte Innenring 2 kann einen kleineren Innendurchmesser als der Außenring 3 besitzen und/oder der Außenring 3 kann einen größeren Außendurchmesser als der genannte Innenring 2 besitzen.

Der eine Laufring 3, vorzugsweise der Außenring, kann eine zum anderen Laufring 2, vorzugsweise zum Innenring hin, eine offene Nut 4 besitzen, in die der andere Laufring 2 mit einem daran vorgesehenen radial vorspringenden Ringabschnitt 5 unter Bildung eines Spalts bzw. mit allseitigem Abstand eingreift. Die genannte Nut 4 kann dabei vorteilhafterweise den radial vorspringenden Ringabschnitt 5 von drei Seiten her umgreifen, und zwar an einer Mantelflächenseite und an zwei gegenüberliegenden axialen Stirnflächenseiten des genannten Ringabschnitts 5.

Wie noch erläutert wird, können alle Axiallager an dem genannten radial vorspringenden Ringabschnitt 5 abgestützt sein.

Ferner kann vorgesehen sein, dass der genannte Laufring 2 mit dem radial vorspringenden Ringabschnitt 5 zumindest einen demgegenüber, d.h. gegenüber dem genannten Ringabschnitt 5 axial vorspringenden Ringabschnitt 15, 16 besitzt, der vom radial vorspringenden Ringabschnitt 5 axial vorspringt und/oder sich außerhalb der Nut 4, in der der radial vorspringende Ringabschnitt 5 eintaucht, erstreckt.

Insbesondere kann der genannte Lagerring 2 zwei solche axial vorspringenden Ringabschnitte 15, 16 aufweisen, die vom radial vorspringenden Ringabschnitt 5 zu gegenüberliegenden Seiten hin axial vorspringen, vgl. Fig. 1.

Wie noch erläutert wird, können zumindest zwei der zumindest drei Radiallager an dem zumindest einen axial vorspringenden Ringabschnitt 15, 16 abgestützt sein, wobei vorteilhafterweise an jedem der genannten axial vorspringenden Ringabschnitte 15, 16 zumindest ein Radiallager abgestützt ist, vgl. Fig. 1 und 2.

Die vorgenannte Nut 4 im Lagerring 3 kann eine - grob gesprochen - U-förmige Bodenkontur umfassen, bei der der Nutboden - gemäß Fig. 1 und 2 jeweils links, oben und unten - von Lagerringschenkeln des Lagerrings 3 umgriffen ist. Um den anderen Lagerring 2 mit dessen radial vorspringendem Ringabschnitt 5 in die genannte Nut 4 einsetzen zu können, kann der die Nut 4 aufweisende Lagerring 3 aus einem Tragring 6 und einem darauf aufsetzbaren Haltering 7 zusammengesetzt sein, vgl. Fig. 1 und 2.

Der Lagerring 2 ist mit seinem radial vorspringendem Ringabschnitt 5 gegenüber der Nut 4 durch vier Axiallager 8, 9 und 10, 17 sowie durch vier Radiallager 11, 12, 13, 14 abgestützt.

Vorteilhafterweise können dabei zwei der genannten Axiallager 8 und 9 auf derselben - gemäß Fig. 1 der unteren - Laufringstirnseite und zwei weitere Axiallager 10 und 17 auf der gegenüberliegenden Laufringstirnseite, d.h. auf gegenüberliegenden Stirnseiten des genannten Radialvorsprungs 5 angeordnet sein.

Wie Fig. 1 zeigt, können die beiden auf derselben Laufringstirnseite vorgesehenen Axiallager 8 und 9 nicht nur in radialer Richtung voneinander beabstandet und auf verschiedenen Laufbahnen angeordnet sein, sondern auch in axialer Richtung - d.h. in Richtung des Pfeils V - zueinander versetzt angeordnet sein, so dass die beiden Axiallager 8 und 9 nicht auf derselben Höhe liegen.

Der Axialversatz AV kann dabei vorteilhafterweise etwa 15% bis 35%, insbesondere etwa 20% des Durchmessers D der Wälzkörper der genannten Axiallager 8 und 9 betragen.

Die beiden auf derselben Laufringstirnseite angeordneten Axiallager 8 und 9 können dabei eine Breite B - gemessen in Radialrichtung - besitzen, die jeweils größer ist als die Breite b der auf der gegenüberliegenden Laufringstirnseite angeordneten Axiallager 10 und 17, wobei der Breitenunterschied etwa 10% bis 50%, vorzugsweise etwa 15% bis 35% betragen kann, d.h. B kann 110% bis 150% bzw. 115% bis 135% von b betragen. Solche unterschiedlichen Rollenbreiten können bei Verwindungen der Lagerringe verhindern, dass alle Axiallager gleichermaßen verkanten und gleichermaßen ungleich tragen.

Die beiden auf derselben Laufringstirnseite liegenden Axiallager 8 und 9 können derart positioniert sein, dass sich jedes Axiallager 8, 9 bei Betrachtung in axialer Richtung mit zumindest jeweils einem der auf der gegenüberliegenden Laufringstirnseite liegenden Axiallager 10, 17 überdeckt.

Wie Fig.1 zeigt, können die Axiallager 10, 17 auf der gegenüberliegenden Seite versatzfrei, d.h. auf derselben Axialhöhe angeordnet sein, wobei die beiden Axiallagerreihen ggf. auf einer durchgängig ausgebildeten, gemeinsamen Laufbahn laufen können und/oder in radialer Richtung im wesentlichen abstandsfrei angeordnet ein können. Alternativ können die genannten Axiallager 10, 17 aber auch radial beabstandet auf separaten Laufbahnen laufen.

Unabhängig hiervon können Axiallager 10, 17 auf der gegenüberliegenden Seite aber auch - ähnlich wie die anderen, gegenüberliegenden Axiallager 8, 9 - nicht nur in radialer Richtung voneinander beabstandet und auf verschiedenen Laufbahnen angeordnet sein, sondern auch in axialer Richtung - d.h. in Richtung des Pfeils V - zueinander versetzt angeordnet sein, so dass die beiden Axiallager 8 und 9 nicht auf derselben Höhe liegen, vgl. hierzu auch Fig. 2, die eine solche Anordnung mit Axialversatz auf beiden Seiten des radial vorspringenden Ringabschnitts 5 zeigt.

Wie Fig. 1 weiterhin zeigt, sind die Laufringe 2, 3 in radialer Richtung durch vier oder auch mehr als vier Radiallager 11, 12, 13, 14 gegeneinander abgestützt, wobei drei der zumindest vier Radiallager 11, 13, 14 auf einer Außenumfangsseite des einen, vorzugsweise inneren Laufrings 2 angeordnet sind und ein viertes der zumindest vier Radiallager 12 auf einer Innenumfangsseite des genannte Laufrings 2 angeordnet ist. Damit stützen die drei Radiallager 11, 13, 14 den inneren Laufring 2 in die Radialrichtung nach außen ab, während das vierte Radiallager 12 den inneren Laufring 2 in die entgegengesetzte Richtung nach innen abstützt.

Grundsätzlich kann die Verteilung und Anordnung der Radiallager 11, 12, 13, 14 aber in verschiedener Weise getroffen sein, bspw. umgekehrt mehr Radiallager den Außenring 3 nach innen abstützen und weniger Radiallager den Außenring 3 nach außen abstützen, oder bspw. eine paarweise bzw. symmetrische Verteilung vorgesehen sein, so dass gleich viele Radiallager den Außenring 3 nach innen und nach außen abstützen.

Um eine kompakte Anordnung und ein festes Einspannen der Lagerringe aneinander zu erzielen, kann in Weiterbildung der Erfindung vorgesehen sein, dass zwei der Radiallager 12, 12 in radialer Richtung betrachtet einander überdeckend, insbesondere in einer gemeinsamen Ebene, die senkrecht zur Wälzlagerdrehachse steht, angeordnet sind, und zumindest ein weiteres der zumindest drei Radiallager 13, 14 in radialer Richtung betrachtet gegenüber allen Radiallagern und ggf. auch gegenüber allen Axiallagern 8, 9, 10, 17 überdeckungsfrei angeordnet ist. Insbesondere können die genannten zwei Radiallager 11, 12 in einer gemeinsamen, zur Lagerdrehachse senkrechten Ebene angeordnet sein, und zwei weitere Radiallager 13 und 14 von dieser Ebene unterschiedlich weit beabstandet angeordnet sein, so dass die zwei weiteren Radiallager 13 und 14 - in radialer Richtung betrachtet - weder sich noch die beiden erstgenannten Radiallager 11, 12 überdecken. Die beiden weiteren Radiallager 13, 14 können dabei auch von allen Axiallagern 8, 9, 10, 17 axial beabstandet angeordnet sein, so dass sie auch die Axiallager - in radialer Richtung betrachtet - nicht überdecken.

Insbesondere können die Radiallager auf verschiedenen Seiten eines oder aller der Axiallager angeordnet sein.

Alternativ oder zusätzlich können die beiden sich in radialer Richtung überdeckenden Radiallager 11, 12 in radialer Richtung betrachtet auch zumindest eines der Axiallager 8, 9 überdeckend angeordnet sein, wobei insbesondere zwei der zumindest Radiallager 11, 12 und zwei der Axiallager 8, 9 zusammen eine gemeinsame Ebene, die sich senkrecht zur Drehachse des Wälzlagers erstreckt, schneiden.

Ggf. kann aber auch nur eines der Radiallager 11 mit einem oder mehreren der Axiallager 8, 9 eine gemeinsame, zur Lagerdrehachse senkrechte Ebene schneiden und somit das eine oder die mehreren Axiallager 8, 9 in radialer Richtung überdecken, wie dies bspw. Fig. 2 zeigt.

Um bei kompakter, platzsparender Anordnung trotz der erhöhten Radiallagerzahl ausreichend große Radialwälzkörper vorsehen zu können, kann zumindest eines der Radiallager 13, 14 eine in einem Laufring 2 versenkte Laufbahn aufweisen, deren Versenktiefe mehr als 25% oder mehr als 33% oder mehr als 50% oder mehr als 66% des Durchmessers der Wälzkörper des genannten Radiallagers beträgt. Vorteilhafterweise können mehrere oder alle der Radiallager solche versenkten Laufbahnen besitzen. Fig. 1 zeigt die beiden Radiallager 13 und 14 mit solchen versenkten Laufbahnen, wobei alternativ oder zusätzlich aber auch eines oder beide der Radiallager 11 und 12 solchermaßen versenkt konfiguriert sein können.

Solche versenkten Laufbahnen können am Innenring 2 und/oder am Außenring 3 des Wälzlagers und/oder an dem Lagerring 2 angeordnet sein, an dem eine Verzahnung 18 für einen nicht näher dargestellten Antrieb, dessen Ritzel mit der Verzahnung kämmen kann, vorgesehen ist.

Solche versenkten Laufbahnen können besonders vorteilhaft sein, wenn die Wälzkörper der Radiallager 11, 12, 13, 14 Zylinderrollen sind, wie dies Fig.1 und Fig. 2 zeigen. Grundsätzlich können die Radiallager 11, 12, 13, 14 aber auch anders geformte Wälzkörper wie bspw. Kugeln, Kegelrollen, Nadeln oder Tonnenrollen aufweisen.

Die Radiallager 11, 12, 13 und 14 können aber auch anders als in Fig. 1 oder Fig.2 verteilt angeordnet bzw. positioniert werden. Erfindungsgemäß ist dabei vorgesehen, dass zumindest eines der zumindest drei Radiallager 13 in einem Lagerspaltabschnitt 19, der zwischen den auf gegenüberliegenden Laufringstirnseiten angeordneten Axiallagern 8, 9 und 10, 17 liegt, angeordnet ist und zumindest ein anderes der Radiallager 11, 12 oder 14 in einem anderen Lagerspaltabschnitt 20 oder 21, der zwischen keinem der Axiallager 8, 9, 10, 17 liegt, angeordnet ist. Mit Lagerspalt ist dabei die Trennfuge bzw. der Spalt zwischen den beiden konzentrischen Lagerringen 2, 3 gemeint.

In einer Ausführungsform, die jedoch nicht zur vorliegenden Erfindung gehört, können alle Axiallager 8, 9, 10, 17 in einem Lagerspaltabschnitt 19, der zwischen zwei oder zwischen drei Radiallagern 11, 12; 14 liegt, angeordnet sein. Mit anderen Worten können Radiallager 11, 12; 14 beidseits aller Axiallager 8, 9, 10, 17 vorgesehen sein. Bevor sich der Lagerspalt zwischen den Lagerringen 2, 3 zur Umgebung hin öffnet bzw. auf dort vorgesehene Dichtungen 22, 23 trifft, ist bei dieser Konfiguration jeweils zumindest ein Radiallager 11, 12; 14 vorgesehen, das jeweils - in Längsrichtung des Lagerspalts - näher zur Lagerspaltdichtung 22, 23 bzw. -öffnung liegt als ein nächstes Axiallager 8, 17. Grundsätzlich wäre es aber auch möglich, dass ein Axiallager das im Lagerspalt äußerste, d.h. das der Spaltdichtung am nächsten kommende Lager bildet.

Das in Fig. 2 gezeigte Wälzlager entspricht bzgl. vieler Merkmalskomplexe der Ausführung nach Fig. 1, und unterscheidet sich von der Ausführung nach Fig. 1 im Wesentlichen durch die Anzahl der Radiallager und die Anordnung der Axiallager.

Zum einen sind bei Fig. 2 nicht nur die auf der einen Laufringstirnseite angeordneten Axiallager 8 und 9 in axialer Richtung zueinander versetzt, sondern auch die auf der gegenüberliegenden Laufringstirnseite angeordneten Axiallager 10, 17. Auch hier können die Axiallager 10, 17 eine kleinere Breite b besitzen als die gegenüberliegenden Axiallager 8, 9. Ferner kann auch hier die Anordnung der beiden Axiallager 8 und 9 so getroffen sein, dass sie sich in axialer Richtung betrachtet mit den beiden gegenüberliegenden Axiallagern 10, 17 überdecken.

Weiterhin können, wie Fig. 2 zeigt, auch nur drei Radiallager 12, 13, 14 vorgesehen sein, die vorteilhafterweise ähnlich der Ausführung nach Fig. 1 über den Lagerspalt und die Axiallager hinweg verteilt angeordnet sein können.

Insbesondere können zwei Radiallager 13, 14 auf einer Außenumfangsseite des einen, vorzugsweise inneren Laufrings 2 angeordnet sind und ein viertes der zumindest vier Radiallager 12 auf einer Innenumfangsseite des genannte Laufrings 2 angeordnet ist. Damit stützen die zwei Radiallager 13, 14 den inneren Laufring 2 in die Radialrichtung nach außen ab, während das vierte Radiallager 12 den inneren Laufring 2 in die entgegengesetzte Richtung nach innen abstützt.

Insofern als die Ausführung der Fig. 2 in weiteren Aspekten, insbesondere auch der Lageranordnung und -verteilung im Übrigen, der Ausführung nach Fig. 1 entspricht, darf auf die vorhergehende Beschreibung verwiesen werden.

## Patentansprüche

1. Wälzlager, insbesondere mittenfreies Großwälzlager, mit zwei konzentrischen Laufringen (2, 3), die in axialer Richtung (13) des Wälzlagers durch zumindest zwei Axiallager (8, 9, 10, 17), die auf gegenüberliegenden Stirnseiten eines Laufrings (2) angeordnet sind, gegeneinander abgestützt und in radialer Richtung des Wälzlagers durch mehrere Radiallager (11, 12, 13, 14), die auf Innen- und Außenumfangsseiten eines Laufrings (2) angeordnet sind, gegeneinander abgestützt sind, wobei die Laufringe (2, 3) in radialer Richtung durch mindestens drei Radiallager (11, 12, 13, 14), die auf Innen- und Außenumfangsseiten eines Laufrings (2) angeordnet sind, gegeneinander abgestützt sind,
**dadurch gekennzeichnet,**
**dass** zumindest eines der zumindest drei Radiallager (13) in einem Lagerspaltabschnitt (19), der zwischen den auf gegenüberliegenden Laufringstirnseiten angeordneten Axiallagern (8, 9; 10, 17) liegt, angeordnet ist und zumindest ein anderes der zumindest drei Radiallager (11, 12, 14) in einem anderen Lagerspaltabschnitt (20, 21), der zwischen keinem der Axiallager (8, 9; 10, 17) liegt, angeordnet ist.

2. Wälzlager nach dem vorhergehenden Anspruch, wobei die Laufringe (2, 3) in radialer Richtung durch vier Radiallager (11, 12, 13, 14) gegeneinander abgestützt sind, wobei drei der vier Radiallager (11, 13, 14) auf einer Außenumfangsseite des einen Laufrings (2) angeordnet sind und ein viertes der vier Radiallager (12) auf einer Innenumfangsseite des genannte Laufrings (2) angeordnet ist.

3. Wälzlager nach einem der vorhergehenden Ansprüche, wobei zwei der zumindest drei Radiallager (11, 12) in radialer Richtung betrachtet einander überdeckend, insbesondere in einer gemeinsamen Ebene, die senkrecht zur Wälzlagerdrehachse steht, angeordnet sind, und zumindest ein weiteres der zumindest drei Radiallager (13, 14) in radialer Richtung betrachtet gegenüber allen Radiallagern (11, 12, 13, 14) und gegenüber allen Axiallagern (8, 9, 10, 17) überdeckungsfrei angeordnet ist, wobei die beiden sich in radialer Richtung überdeckenden Radiallager (11, 12) in radialer Richtung betrachtet auch zumindest eines der Axiallager (8, 9) überdeckend angeordnet sind, wobei insbesondere zwei der zumindest drei Radiallager (11, 12) und zwei der Axiallager (8, 9) zusammen eine gemeinsame Ebene, die sich senkrecht zur Drehachse des Wälzlagers erstreckt, schneiden.

4. Wälzlager nach einem der vorhergehenden Ansprüche, wobei zumindest eines der zumindest drei Radiallager (13, 14) eine in einem Laufring (2) versenkte Laufbahn aufweist, deren Versenktiefe mehr als 25% oder mehr als 33% oder mehr als 50% oder mehr als 66% des Durchmessers der Wälzkörper des genannten Radiallagers beträgt.

5. Wälzlager nach einem der vorhergehenden Ansprüche, wobei alle Axiallager (8, 9, 10, 17) in einem Lagerspaltabschnitt (19), der zwischen zwei oder zwischen drei Radiallagern (11, 12; 14) liegt, angeordnet sind.

6. Wälzlager nach einem der vorhergehenden Ansprüche, wobei die Laufringe (2, 3) durch ein drittes Axiallager (8, 9, 10) in axialer Richtung abgestützt sind, wobei zwei Axiallager (8, 9) auf derselben Stirnseite eines Laufrings (2), in axialer Richtung zueinander versetzen Laufbahnen angeordnet sind, wobei der axiale Versatz (AV) der beiden Laufbahnen der auf derselben Stirnseite eines Laufrings (2) angeordneten Axiallager (8, 9) zwischen 10% und 200%, vorzugsweise 10% bis 100%, insbesondere 15% bis 35%, des Wälzkörperdurchmessers D dieser Axiallager (8, 9) beträgt.

7. Wälzlager nach Anspruch 6, wobei die Laufringe (2, 3) durch ein viertes Axiallager (8, 9, 10, 17) in axialer Richtung abgestützt sind, wobei jeweils zwei Axiallager (8, 9; 10, 17) paarweise auf jeder der gegenüberliegenden Stirnseiten eines Lagerrings (2) angeordnet sind, wobei nur auf einer der beiden gegenüberliegenden Stirnseiten eines Laufrings (2) die dort vorgesehenen Axiallager (8, 9) auf in axialer Richtung zueinander versetzen Laufbahnen angeordnet sind, während die auf der anderen der beiden gegenüberliegenden Stirnseiten des Laufrings (2) vorgesehenen Axiallager (10, 17) auf in axialer Richtung zueinander versatzfreien Laufbahnen angeordnet sind.

8. Wälzlager nach Anspruch 6, wobei die Laufringe (2, 3) durch ein viertes Axiallager (8, 9, 10, 17) in axialer Richtung abgestützt sind, wobei jeweils zwei Axiallager (8, 9; 10, 17) paarweise auf jeder der gegenüberliegenden Stirnseiten eines Lagerrings (2) angeordnet sind, wobei auf jeder der beiden gegenüberliegenden Stirnseiten eines Laufrings (2) die dort vorgesehenen Axiallager (8, 9; 10, 17) jeweils auf in axialer Richtung zueinander versetzten Laufbahnen angeordnet sind.

9. Wälzlager nach einem der vorhergehenden Ansprüche, wobei einer der Laufringe (2) einen radial vorspringenden Ringabschnitt (5) aufweist, der in eine Nut (4) im anderen Laufring (3) eintaucht, wobei alle Axiallager (8, 9, 10, 17) an dem genannten radial vorspringenden Ringabschnitt (5) abgestützt sind, wobei der genannte Laufring (2) mit dem radial vorspringenden Ringabschnitt (5) zumindest einen axial vorspringenden Ringabschnitt (15, 16) besitzt, der vom radial vorspringenden Ringabschnitt (5) axial vorspringt und/oder sich außerhalb der Nut (4), in der der radial vorspringende Ringabschnitt (5) eintaucht, erstreckt, wobei zumindest zwei der zumindest drei Radiallager (11, 12; 14) an dem zumindest einen axial vorspringenden Ringabschnitt (15; 16) abgestützt sind.

10. Wälzlager nach Anspruch 7 oder 8, wobei die beiden auf derselben Laufringstirnseite angeordneten Axiallager (10, 17) jeweils eine Breite (b) besitzen, die kleiner ist als die Breite (B) des oder jedes der auf der gegenüberliegenden Laufringstirnseite angeordneten Axiallager (8, 9).

11. Wälzlager nach einem der vorhergehenden Ansprüche, wobei jedes der auf einer Laufringstirnseite angeordneten Axiallager (8, 9) zumindest eines der auf der gegenüberliegenden Laufringstirnseite angeordneten Axiallager (10, 17) in axialer Richtung betrachtet überdeckt.

12. Wälzlager nach einem der vorhergehenden Ansprüche, wobei die Laufringe (2, 3) durch genau drei oder vier auf gegenüberliegenden Seiten angeordnete Radiallager (11, 12, 13, 14) und genau vier auf gegenüberliegenden Seiten angeordnete Axiallager (8, 9, 10, 17) gegeneinander abgestützt sind.

13. Wälzlager nach einem der vorhergehenden Ansprüche, wobei die Laufringe (2, 3) jeweils einen Durchmesser von mehr als 1m oder mehr als 5m oder mehr als 10m besitzen.

14. Wälzlager nach einem der vorhergehenden Ansprüche, wobei die Laufringe (2, 3) segmentiert ausgebildet sind.

15. Kran mit einer Basisstruktur und einer einen Kranauslager tragenden Oberstruktur, die um eine aufrechte Drehachse an der Basisstruktur durch ein Wälzlager, das gemäß einem der vorhergehenden Ansprüche ausgebildet ist, drehbar gelagert ist.

## Claims

1. A rolling bearing, more particularly an open-centred large rolling bearing, having two concentric bearing rings (2, 3) which are supported against one another in the axial direction (13) of the rolling bearing by means of at least two thrust bearings (8, 9, 10, 17), which are arranged on opposite end faces of a bearing ring (2), and in the radial direction of the rolling bearing, said bearing rings are supported against one another by several radial bearings (11, 12, 13, 14), which are arranged on inner and outer circumferential sides of a bearing ring (2), wherein the bearing rings (2, 3) are supported against one another in the radial direction by at least three radial bearings (11, 12, 13, 14), which are arranged on inner and outer circumferential sides of a bearing ring (2),
**characterized in that**
at least one of the at least three radial bearings (13) is arranged in a bearing gap portion (19) located between the thrust bearings (8, 9; 10, 17), which are arranged on the oppositely disposed end faces of the bearing ring, and at least one other of the at least three radial bearings (11, 12, 14) is arranged in another bearing gap portion (20, 21) not located between any of the thrust bearings (8, 9; 10, 17).

2. The rolling bearing according to the preceding claim, wherein the bearing rings (2, 3) are supported against one another in the radial direction by four radial bearings (11, 12, 13, 14), wherein three of the four radial bearings (11, 13, 14) are arranged on an outer circumferential side of the one bearing ring (2) and wherein a fourth of the four radial bearings (12) is arranged on an inner circumferential side of said bearing ring (2).

3. The rolling bearing according to any of the preceding claims, wherein two of the at least three radial bearings (11, 12) cover each other, viewed in the radial direction, which more particularly are arranged in a common plane which is perpendicular to an axis of rotation of the rolling bearing, and wherein at least one further one of the at least three radial bearings (13, 14) is arranged without coverage, viewed in the radial direction, with respect to all radial bearings (11, 12, 13, 14) and with respect to all thrust bearings (8, 9, 10, 17), wherein the two radial bearings (11, 12) covering each other, viewed in the radial direction, are also arranged to cover at least one of the thrust bearings (8, 9), wherein more particularly two of the at least three radial bearings (11, 12) and two of the thrust bearings (8, 9) together intersect a common plane which extends perpendicularly to the axis of rotation of the rolling bearing.

4. The rolling bearing according to any of the preceding claims, wherein at least one of the at least three radial bearings (13, 14) has a raceway which is recessed in a bearing ring (2) and the recess depth of which is more than 25% or more than 33% or more than 50% or more than 66% of a rolling element diameter of said radial bearing.

5. The rolling bearing according to any of the preceding claims, wherein all thrust bearings (8, 9, 10, 17) are arranged in a bearing gap portion (19), which is located between two or between three radial bearings (11, 12; 14).

6. The rolling bearing according to any of the preceding claims, wherein the bearing rings (2, 3) are supported in the axial direction by a third thrust bearing (8, 9, 10), wherein two thrust bearings (8, 9) are arranged on the same end face of a bearing ring (2), with raceways axially offset from one another, wherein the axial offset (AV) of the two raceways of the thrust bearings (8, 9) arranged at the same end face of a bearing ring (2) amounts to between 10% and 200%, preferably 10% to 100%, more particularly 15% to 35%, of the rolling element diameter D of these thrust bearings (8, 9).

7. The rolling bearing according to Claim 6, wherein the bearing rings (2, 3) are supported in the axial direction by a fourth thrust bearing (8, 9, 10, 17), wherein in each case two thrust bearings (8, 9; 10, 17) are arranged in pairs on each of the opposite end faces of a bearing ring (2), wherein only on one of the two oppositely disposed end faces of a bearing ring (2) are the thrust bearings (8, 9) provided thereon arranged on raceways offset from one another in the axial direction, while the thrust bearings (10, 17) provided on the other of the two opposite end faces of the bearing ring (2) are arranged on raceways without any offset from one another in the axial direction.

8. The rolling bearing according to Claim 6, wherein the bearing rings (2, 3) are supported in the axial direction by a fourth thrust bearing (8, 9, 10, 17), wherein in each case two thrust bearings (8, 9; 10, 17) are arranged in pairs on each of the opposite end faces of a bearing ring (2), wherein the thrust bearings (8, 9, 10, 17) provided on each of the two opposite end faces of a bearing ring (2) are each arranged on raceways offset in the axial direction.

9. The rolling bearing according to any of the preceding claims, wherein one of the bearing rings (2) has a radially protruding ring portion (5) which recesses into a groove (4) in the other bearing ring (3), wherein all thrust bearings (8, 9, 10, 17) are supported on said radially protruding ring portion (5), wherein said bearing ring (2) with the radially protruding ring portion (5) has at least one axially protruding ring portion (15, 16), which axially protrudes from the radially protruding ring portion (5) and/or extends outside the groove (4) in which the radially protruding ring portion (5) is recessed, wherein at least two of the at least three radial bearings (11, 12; 14) are supported on the at least one axially protruding ring portion (15; 16).

10. The rolling bearing according to Claim 7 or 8, wherein the two thrust bearings (10, 17) arranged on the same end face of the bearing ring each have a width (b) which is smaller than the width (B) of the or each thrust bearing (8, 9) at the oppositely disposed end face of the bearing ring.

11. The rolling bearing according to any of the preceding claims, wherein each of the thrust bearings (8, 9) arranged on one end face of the bearing ring covers at least one of the thrust bearings (10, 17) which are arranged on the oppositely disposed end face of the bearing ring, viewed in the axial direction.

12. The rolling bearing according to any of the preceding claims, wherein the two thrust bearings (10, 17) are supported on one another by exactly three or four radial bearings (11, 12, 13, 14) which are arranged on opposite sides and exactly four thrust bearings (8, 9, 10, 17) which are arranged on opposite sides.

13. The rolling bearing according to any of the preceding claims, wherein the bearing rings (2, 3) each have a diameter of more than 1m or more than 5m or more than 10m.

14. The rolling bearing according to any of the preceding claims, wherein the bearing rings (2, 3) are formed in a segmented way.

15. A crane comprising a base structure and a superstructure, which carries a crane boom and which is rotatably mounted around an upright rotation axis on the base structure by means of a rolling bearing formed according to any of the preceding claims.

## Revendications

1. Palier à roulement, en particulier palier à roulement de grande dimension à centre ouvert, comportant deux bagues de roulement (2, 3) concentriques, qui sont supportées l'une contre l'autre dans la direction axiale (13) du palier à roulement par au moins deux roulements axiaux (8, 9, 10, 17) qui sont disposés sur des faces frontales opposées d'une bague de roulement (2), et qui sont supportées l'une contre l'autre dans la direction radiale du palier à roulement par plusieurs roulements radiaux (11, 12, 13, 14) qui sont disposés sur des faces circonférentielles intérieure et extérieure d'une bague de roulement (2), les bagues de roulement (2, 3) étant supportées l'une contre l'autre dans la direction radiale par au moins trois roulements radiaux (11, 12, 13, 14) qui sont disposés sur des faces circonférentielles intérieure et extérieure d'une bague de roulement (2),
**caractérisé en ce que**
au moins un des au moins trois roulements radiaux (13) est disposé dans une partie de jeu de palier (19), qui se trouve entre les roulements axiaux (8, 9 ; 10, 17) disposés sur des faces frontales de bague de roulement opposées et au moins un autre des au moins trois roulements radiaux (11, 12, 14) est disposé dans une autre partie de jeu de palier (20, 21), qui ne se trouve entre aucun des roulements axiaux (8, 9 ; 10, 17).

2. Palier à roulement selon la revendication précédente, dans lequel les bagues de roulement (2, 3) sont supportées l'une contre l'autre dans la direction radiale par quatre roulements radiaux (11, 12, 13, 14), trois des quatre roulements radiaux (11, 13, 14) étant disposés sur une face circonférentielle extérieure de l'une (2) des bagues de roulement et un quatrième des quatre roulements radiaux (12) étant disposé sur une face circonférentielle intérieure de ladite bague de roulement (2).

3. Palier à roulement selon l'une des revendications précédentes, dans lequel deux des au moins trois roulements radiaux (11, 12) sont disposés, vus dans la direction radiale, se recouvrant mutuellement, en particulier dans un plan commun qui est perpendiculaire à l'axe de rotation du palier à roulement, et au moins un autre des au moins trois roulements radiaux (13, 14) est disposé, vu dans la direction radiale, sans recouvrement par rapport à tous les roulements radiaux (11, 12, 13, 14) et par rapport à tous les roulements axiaux (8, 9, 10, 17), les deux roulements radiaux (11, 12) qui se recouvrent dans la direction radiale étant disposés, vus dans la direction radiale, recouvrant aussi au moins un des roulements axiaux (8, 9), en particulier deux des au moins trois roulements radiaux (11, 12) et deux des roulements axiaux (8, 9) coupant ensemble un plan commun qui s'étend perpendiculairement à l'axe de rotation du palier à roulement.

4. Palier à roulement selon l'une des revendications précédentes, dans lequel au moins un des au moins trois roulements radiaux (13, 14) présente un chemin de roulement enfoncé dans une bague de roulement (2), dont la profondeur d'enfoncement est égale à plus de 25 % ou plus de 33 % ou plus de 50 % ou plus de 66 % du diamètre des organes de roulement dudit roulement radial.

5. Palier à roulement selon l'une des revendications précédentes, dans lequel tous les roulements axiaux (8, 9, 10, 17) sont disposés dans une partie de jeu de palier (19) qui se trouve entre deux ou entre trois roulements radiaux (11, 12 ; 14).

6. Palier à roulement selon l'une des revendications précédentes, dans lequel les bagues de roulement (2, 3) sont supportées dans la direction axiale par un troisième roulement axial (8, 9, 10), deux roulements axiaux (8, 9) sur la même face frontale d'une bague de roulement (2) étant disposés sur des chemins de roulement décalés l'un par rapport à l'autre dans la direction axiale, le décalage axial (AV) des deux chemins de roulement des roulements axiaux (8, 9) disposés sur la même face frontale d'une bague de roulement (2) étant égal à une valeur comprise entre 10 % et 200 %, de préférence de 10 % à 100 %, en particulier de 15 % à 35 %, du diamètre d'organe de roulement D de ces roulements axiaux (8, 9).

7. Palier à roulement selon la revendication 6, dans lequel les bagues de roulement (2, 3) sont supportées dans la direction axiale par un quatrième roulement axial (8, 9, 10, 17), respectivement deux roulements axiaux (8, 9 ; 10, 17) étant disposés par paires sur chacune des face frontales opposées d'une bague de palier (2), dans lequel, seulement sur une des deux faces frontales opposées d'une bague de roulement (2), les roulements axiaux (8, 9) prévus sur celle-ci sont disposés sur des chemins de roulement décalés l'un par rapport à l'autre dans la direction axiale, tandis que les roulements axiaux (10, 17) prévus sur l'autre des deux faces frontales opposées de la bague de roulement (2) sont disposés sur des chemins de roulement sans décalage l'un par rapport à l'autre dans la direction axiale.

8. Palier à roulement selon la revendication 6, dans lequel les bagues de roulement (2, 3) sont supportées dans la direction axiale par un quatrième roulement axial (8, 9, 10, 17), respectivement deux roulements axiaux (8, 9 ; 10, 17) étant disposés par paires sur chacune des face frontales opposées d'une bague de palier (2), dans lequel, sur chacune des deux faces frontales opposées d'une bague de roulement (2), les roulements axiaux (8, 9 ; 10, 17) prévus sur celle-ci sont disposés respectivement sur des chemins de roulement décalés l'un par rapport à l'autre dans la direction axiale.

9. Palier à roulement selon l'une des revendications précédentes, dans lequel une des bagues de roulement (2) présente une partie de bague (5) faisant saillie radialement, qui s'enfonce dans une rainure (4) située dans l'autre bague de roulement (3), tous les roulements axiaux (8, 9, 10, 17) étant supportés sur ladite partie de bague (5) faisant saillie radialement, ladite bague de roulement (2) avec la partie de bague (5) faisant saillie radialement possédant au moins une partie de bague (15, 16) faisant saillie axialement, qui fait saillie axialement depuis la partie de bague (5) faisant saillie radialement et/ou qui s'étend en dehors de la rainure (4) dans laquelle la partie de bague (5) faisant saillie radialement s'enfonce, au moins deux des au moins trois roulements radiaux (11, 12 ; 14) étant supportés sur l'au moins une partie de bague (15 ; 16) faisant saillie axialement.

10. Palier à roulement selon la revendication 7 ou 8, dans lequel les deux roulements axiaux (10, 17) disposés sur la même face frontale de bague de roulement possèdent respectivement une largeur (b) qui est inférieure à la largeur (B) du ou de chacun des roulements axiaux (8, 9) disposés sur la face frontale de bague de roulement opposée.

11. Palier à roulement selon l'une des revendications précédentes, dans lequel chacun des roulements axiaux (8, 9) disposés sur une face frontale de bague de roulement recouvre, vu dans la direction axiale, au moins un des roulements axiaux (10, 17) disposés sur la face frontale de bague de roulement opposée.

12. Palier à roulement selon l'une des revendications précédentes, dans lequel les bagues de roulement (2, 3) sont supportées l'une contre l'autre par exactement trois ou quatre roulements radiaux (11, 12, 13, 14) disposés sur des faces opposées et exactement quatre roulements radiaux (8, 9, 10, 17) disposés sur des faces opposées.

13. Palier à roulement selon l'une des revendications précédentes, dans lequel les bagues de roulement (2, 3) possèdent respectivement un diamètre supérieur à 1 m ou supérieur à 5 m ou supérieur à 10 m.

14. Palier à roulement selon l'une des revendications précédentes, dans lequel les bagues de roulement (2, 3) sont réalisées de manière segmentée.

15. Grue dotée d'une structure de base et d'une structure supérieure portant une flèche de grue, qui est montée rotative sur un axe de rotation vertical sur la structure de base au moyen d'un palier à roulement qui est conçu selon l'une des revendications précédentes.
